(19) Europäisches Patentamt
European Patent Office
Office européen des brevets

(11) **EP 4 769 532 A1**

(12) **EUROPEAN PATENT APPLICATION**

(43) Date of publication:
**01.07.2026 Bulletin 2026/27**

(21) Application number: **25227110.1**

(22) Date of filing: **23.12.2025**

(51) International Patent Classification (IPC):
*H01M 4/134* (2010.01)     *H01M 4/1395* (2010.01)
*H01M 4/36* (2006.01)       *H01M 4/38* (2006.01)

(52) Cooperative Patent Classification (CPC):
**H01M 4/134; H01M 4/1395; H01M 4/366;
H01M 4/386;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 KR 20240199237**

(71) Applicant: **SK On Co., Ltd.
Seoul 03161 (KR)**

(72) Inventors:
• **YANG, Young Mo
34124 Daejeon (KR)**
• **PARK, Gwi Ok
34124 Daejeon (KR)**

(74) Representative: **Stolmár & Partner
Patentanwälte PartG mbB
Blumenstraße 17
80331 München (DE)**

(54) **SILICON-CARBON-CONTAINING ELECTRODE MATERIAL, METHOD OF MANUFACTURING THE SAME AND SECONDARY BATTERY INCLUDING THE SAME**

(57) According to embodiments of the present disclosure, a silicon-carbon-containing electrode material, a method for manufacturing the same, and a secondary battery including the same are provided. The silicon-carbon-containing electrode material includes a porous carbon structure; a silicon-containing coating disposed on the porous carbon structure; and a carbon-containing coating disposed on the silicon-containing coating. The electrode material has a color difference ($\Delta E^*$) of 5.0 to 19.0 and a Raman intensity ratio (R) of 0.5 to 2.0.

FIG. 1

| HV 5.00 kV | curr 0.40 nA | mag ⊠ 1 200 × | use case Standard | det ETD | WD 5.1 mm | PW 68.9 nm | ⊢——20 µm——⊣ SK innovation_Apreo HiVac |

EP 4 769 532 A1

**Description**

[BACKGROUND OF THE INVENTION]

1. Field of the Invention

The disclosure of the present application relates to a silicon-carbon-containing electrode material, a method for manufacturing the same, and a secondary battery including the same.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickel-cadmium battery, a nickel-hydrogen battery and the like. Among them, the lithium secondary battery has a high operating voltage and a high energy density per unit weight, making it advantageous in terms of charging speed and weight reduction.

As active materials included in electrodes, for example, carbon-based materials, silicon materials, and carbon-silicon composite materials are used, and research and development thereon is actively underway.

[SUMMARY OF THE INVENTION]

An object of the present disclosure is to provide a silicon-carbon-containing electrode material having improved cycle life characteristics and high-temperature stability.

Another object of the present disclosure is to provide a method for manufacturing the silicon-carbon-containing electrode material.

Yet another object of the present disclosure is to provide a secondary battery having improved cycle life characteristics and high-temperature stability.

A silicon-carbon-containing electrode material according to embodiments of the present disclosure includes: a porous carbon structure; a silicon-containing coating disposed on the porous carbon structure; and a carbon-containing coating disposed on the silicon-containing coating, wherein the color difference ($\Delta E^*$) calculated by Equation 1 below is 5.0 to 19.0, and the Raman intensity ratio (R) calculated by Equation 2 below is 0.5 to 2.0:

[Equation 1]

$$\text{Color difference } (\Delta E^*) = [(L^*)^2 + (a^*)^2 + (b^*)^2]^{1/2}$$

In Equation 1, L* denotes a lightness index, and a* and b* denote chromaticity indices measured for the silicon-carbon-containing electrode material according to the CIE 1976 Lab color space under CIE Standard Illuminant D65 conditions.

[Equation 2]

$$\text{Raman intensity ratio } (R) = I_{c\text{-}si}/I_{a\text{-}si}$$

In Equation 2, $I_{c\text{-}si}$ denotes a maximum peak intensity in a Raman shift range of 515 cm$^{-1}$ to 524 cm$^{-1}$ in a Raman spectrum measured for the silicon-containing coating, and Ia-si denotes a maximum peak intensity in a Raman shift range of 470 cm$^{-1}$ to 490 cm$^{-1}$ in the Raman spectrum.

In some embodiments, $\Delta E^*$ may be 8.0 to 19.0.

In some embodiments, the Raman intensity ratio (R) may be greater than 1.0 and not more than 2.0.

In some embodiments, the porous carbon structure may include amorphous carbon, and the silicon-containing coating may include amorphous silicon.

In some embodiments, the silicon-carbon-containing electrode material may have a specific surface area of 1 $m^2/g$ to 10 $m^2/g$.

In some embodiments, the specific surface area may be 5 $m^2/g$ to 9 $m^2/g$.

In some embodiments, the porous carbon structure may have a median particle diameter of 4 $\mu m$ to 10 $\mu m$.

In some embodiments, the weight ratio of the silicon-containing coating to the porous carbon structure may be 0.8 to 1.2.

In some embodiments, the content of the carbon-containing coating may be 2.5% by weight to 6.0% by weight based on the total weight of the electrode material.

In some embodiments, the porous carbon structure may include carbon derived from at least one selected from the group consisting of wood-based biomass, petroleum pitch, phenolic polymers, aldehyde-based polymers, naphthalene-based polymers, polyacrylonitrile-based polymers, polyvinyl alcohol-based polymers, polyurethane-based polymers, polyvinylidene polymers, polyimide-based polymers, polyethylene glycol-based polymers, polypropylene-based polymers, polyethylene-based polymers, cellulose, glucose, sucrose, and organic acids.

A method for manufacturing a silicon-carbon-containing electrode material according to embodiments of the present disclosure includes: forming a porous carbon structure; depositing silicon on the porous carbon structure to form a silicon-containing coating; and forming a carbon-containing coating on the silicon-containing coating, wherein the silicon-carbon-containing electrode material manufactured by the method has a color difference ($\Delta E^*$) calculated by Equation 1 below is 5.0 to 19.0, and a Raman intensity ratio (R) calculated by Equation 2 below is 0.5 to 2.0:

[Equation 1]

$$\text{Color difference } (\Delta E^*) = [(L^*)^2 + (a^*)^2 + (b^*)^2]^{1/2}$$

In Equation 1, L* denotes a lightness index, and a* and b* denote chromaticity indices measured for the silicon-carbon-containing electrode material according to the CIE 1976 Lab color space under CIE Standard Illuminant D65 conditions.

[Equation 2]

$$\text{Raman intensity ratio } (R) = I_{c\text{-}si}/I_{a\text{-}si}$$

In Equation 2, $I_{c\text{-}si}$ denotes a maximum peak intensity in a Raman shift range of 515 $cm^{-1}$ to 524 $cm^{-1}$ in a Raman spectrum measured for the silicon-containing coating, and $I_{a\text{-}si}$ denotes a maximum peak intensity in a Raman shift range of 470 $cm^{-1}$ to 490 $cm^{-1}$ in the Raman spectrum.

In some embodiments, the silicon deposition may be performed under a pressure condition of 680 torr to 730 torr.

In some embodiments, the silicon deposition may be performed under a pressure condition of 680 torr or more and less than 700 torr.

In some embodiments, the carbon precursor may include at least one selected from the group consisting of wood-based biomass, petroleum pitch, phenolic polymers, aldehyde-based polymers, naphthalene-based polymers, polyacrylonitrile-based polymers, polyvinyl alcohol-based polymers, polyurethane-based polymers, polyvinylidene polymers, polyimide-based polymers, polyethylene glycol-based polymers, polypropylene-based polymers, polyethylene-based polymers, cellulose, glucose, sucrose, and organic acids.

In some embodiments, the carbon precursor may include wood-based biomass including coconut shells.

A secondary battery according to embodiments of the present disclosure includes: an anode including the above-described silicon-carbon-containing electrode material; and a cathode disposed opposite the anode.

The silicon-carbon-containing electrode material according to embodiments of the present disclosure may achieve improved cycle life characteristics and high-temperature stability.

The secondary battery according to embodiments of the present disclosure may achieve improved cycle life characteristics and high-temperature stability.

The silicon-carbon-containing electrode material according to the present disclosure and the secondary battery including the same may be widely applied in green technology fields, such as electric vehicles, battery charging stations, as well as solar power generation, wind power generation, and the like, which use the batteries. The silicon-carbon-containing electrode material according to the present disclosure and the secondary battery including the same may be used in eco-friendly electric vehicles, hybrid vehicles, and the like, which are aimed at mitigating climate change by reducing air pollution and greenhouse gas emissions.

[BRIEF DESCRIPTION OF THE DRAWINGS]

The above and other objects, features and advantages of the present disclosure will be more clearly understood from the following detailed description taken in conjunction with the accompanying drawings, in which:

FIG. 1 is a scanning electron microscope (SEM) image illustrating a cross-section of a silicon-carbon-containing electrode material prepared in Example 1;
FIG. 2 is a schematic plan view illustrating a secondary battery according to exemplary embodiments;
FIG. 3 is a schematic cross-sectional view illustrating the secondary battery according to exemplary embodiments; and
FIG. 4 is a schematic process flowchart illustrating a method for manufacturing a silicon-carbon-containing electrode material according to exemplary embodiments.

[DETAILED DESCRIPTION OF THE INVENTION]

Hereinafter, exemplary embodiments of the present disclosure will be described in detail with reference to the drawings so that persons of ordinary knowledge in the technical field to which the present invention pertains may easily implement the present invention.

<Silicon-carbon-containing electrode material>

A silicon-carbon-containing electrode material according to exemplary embodiments of the present disclosure includes: a porous carbon structure; a silicon-containing coating disposed on the porous carbon structure; and a carbon-containing coating disposed on the silicon-containing coating, wherein the color difference ($\Delta E^*$) calculated by Equation 1 below is 5.0 to 19.0, and the Raman intensity ratio (R) calculated by Equation 2 below is 0.5 to 2.0.

$$[\text{Equation 1}]$$
$$\text{Color difference } (\Delta E^*) = [(L^*)^2 + (a^*)^2 + (b^*)^2]^{1/2}$$

In Equation 1, L* denotes a lightness index, and a* and b* denote chromaticity indices measured for the silicon-carbon-containing electrode material according to the CIE 1976 Lab color space under CIE Standard Illuminant D65 conditions.

$$[\text{Equation 2}]$$
$$\text{Raman intensity ratio } (R) = I_{c\text{-}si}/I_{a\text{-}si}$$

In Equation 2, $I_{c\text{-}si}$ denotes a maximum peak intensity in a Raman shift range of 515 cm$^{-1}$ to 524 cm$^{-1}$ in a Raman spectrum measured for the silicon-containing coating, and Ia-si denotes a maximum peak intensity in a Raman shift range of 470 cm$^{-1}$ to 490 cm$^{-1}$ in the Raman spectrum.
The silicon-carbon-containing electrode material may have a structure including amorphous silicon and crystalline silicon in an appropriate ratio, and also including amorphous carbon and crystalline carbon in an appropriate ratio, thereby suppressing volume expansion of the electrode material during repeated charging and discharging, preventing an increase in internal resistance, and effectively enhancing electrochemical stability. Accordingly, an anode and a secondary battery including the silicon-carbon-containing electrode material may achieve improved cycle life characteristics and high-temperature stability.
L* denotes a lightness index measured under the conditions of the CIE 1976 L*a*b* color space and CIE Standard Illuminant D65, and a* and b* denote a red-green chromaticity index and a yellow-blue chromaticity index, respectively.
The color difference may be measured using, for example, a spectrophotometer or a colorimeter, such as the Color Reader CR-20. The spectrophotometer or the colorimeter may use, for example, D65 as an observation light source, have an observation condition of a 10° field of view, and have repeatability of within a standard deviation $\Delta E^*$ab 0.1 (when measured 30 times at 10-second intervals using a white calibration plate).

L*, a*, and b* may be measured on a white background. For example, the color difference may be measured by placing the silicon-carbon-containing electrode material on a white background plate. For example, L*, a*, and b* may be measured under room temperature and a relative humidity of less than 70%.

For example, the color difference ($\Delta$E*) may be an average value obtained from measurements taken at 3 to 30 points on the surface of the silicon-carbon-containing electrode material.

The porous carbon structure includes a plurality of pores.

The silicon-containing coating may be formed on an outer surface and an inner surface of the porous carbon structure. The inner surface may be a surface forming the pores, that is, a surface surrounding the pores or a surface defining the pores.

The silicon-containing coating may be formed on a portion or the entirety of the outer surface of the porous carbon structure, and may be formed on a portion or the entirety of the inner surface. When the silicon-containing coating is formed on a portion of the inner surface, it may be formed, for example, in the form of a plurality of discontinuous islands or patterns on the inner surface.

In some embodiments, L* may be, for example, 10 to 60.

In some embodiments, a* may be, for example, 0 to 10.

In some embodiments, b* may be, for example, -40 to -10.

The Raman intensity ratio (R) may be used as an indicator representing the relative crystallinity of the measurement target, with a higher value indicating a relatively higher crystallinity and a lower value indicating a lower crystallinity. The peak area value of each Raman shift region may be calculated by integrating peaks in the Raman spectroscopy analysis spectrum, and the calculation may be performed using Resolutions Pro software. The calculation may be performed, for example, by deriving a baseline from the Raman spectrum using a second derivative method, fitting a peak corresponding to a Raman shift in each region to a Gaussian curve, and integrating an area of the fitted peak.

The Raman spectroscopy analysis may be performed on any 10 to 3000 regions on the surface of the silicon-containing coating, and the area of each region may be, for example, 50 $\mu$m $\times$ 50 $\mu$m or 100 $\mu$m $\times$ 100 $\mu$m. The Raman spectroscopy analysis may be performed under the following conditions: laser irradiation wavelength of 532 nm to 785 nm, magnification of 10$\times$ to 50$\times$, grating resolution of 1800 L/mm, laser power of 0.01 mW to 90 mW, and number of scans of 1 to 10.

In some embodiments, the color difference ($\Delta$E*) may be 5.0 to 19.0, 8.0 to 19.0, 8.0 to 15.0, or 9.0 to 15.0. If the color difference ($\Delta$E*) is too low, the capacity characteristics of the anode and the secondary battery using the silicon-carbon-containing electrode material may deteriorate, and if it is too high, the internal resistance of the anode and the secondary battery may increase. By controlling the color difference ($\Delta$E*) within the above-described range, the amorphous and crystalline states of silicon and carbon, respectively, may be optimized, thereby improving the capacity characteristics and high-temperature stability of the anode and the secondary battery.

In some embodiments, the Raman intensity ratio (R) may be 0.5 to 2.0, greater than 1.0, and not more than 2.0, for example, greater than 1.2 to 1.8, , 1.4 to 1.6, or 1.5 to 1.6. If the Raman intensity ratio (R) is too low, manufacturing the electrode material may be difficult, and if it is too high, cracks may occur due to repeated expansion and contraction of the electrode material during charge and discharge, which may result in deterioration of electrochemical performance.

In some embodiments, the silicon-carbon-containing electrode material may have a specific surface area of 1 $m^2/g$ to 10 $m^2/g$, for example, 5 $m^2/g$ to 9 $m^2/g$ or 6 $m^2/g$ to 9 $m^2/g$.

By way of a non-limiting example, the specific surface area of the silicon-carbon-containing electrode material may be measured according to a Brunauer-Emmett Teller (BET) method based on nitrogen adsorption and desorption. By way of a non-limiting example, the specific surface area may be calculated using an adsorption isotherm obtained by adsorbing and desorbing nitrogen under 77 K conditions in a nitrogen atmosphere.

In some embodiments, the porous carbon structure may have a pore size of 2 nm to 10 nm, for example, 2 nm to 7 nm. The pore size may refer to, for example, the maximum diameter of a cross-section passing through the center of the pore.

In some embodiments, the porous carbon structure may have a total pore volume of, for example, 0.8 $cm^3/g$ to 1.2 $cm^3/g$, 0.8 $cm^3/g$ to 1.1 $cm^3/g$, 0.8 $cm^3/g$ to 1.0 $cm^3/g$, or 0.8 $cm^3/g$ to 0.99 $cm^3/g$.

By way of a non-limiting example, the pore volume may be measured using nitrogen gas adsorption/desorption according to the standards specified in ISO 15901-2 and ISO 15901-3.

In some embodiments, the porous carbon structure may have a particle shape and a median particle diameter of 4 $\mu$m to 10 $\mu$m. The median particle diameter may refer to, for example, $D_{50}$ measured through particle size distribution analysis, i.e., the particle diameter corresponding to 50% of the cumulative particle volume-based distribution.

The particle size distribution analysis may be performed, for example, using a wet dispersion method, and a dispersion medium may include water, an alcohol-based solvent, or a mixture thereof, without being limited thereto. By way of a non-limiting example, the average particle diameter may refer to D50 measured according to a laser diffraction particle size distribution analysis method, that is, a particle diameter corresponding to 50% in a cumulative volume distribution of particles.

In some embodiments, the weight ratio of the silicon-containing coating to the porous carbon structure may be 0.8 to 1.2, for example, 0.9 to 1.15 or 1 to 1.1.

The silicon-containing coating may include silicon.

In some embodiments, the silicon-carbon-containing electrode material may include silicon in an amount of 35% by weight ("wt%") to 65 wt% based on the total weight, for example, 40 wt% to 60 wt%, or 50 wt% to 60 wt%.

In some embodiments, the silicon-carbon-containing electrode material may include the carbon-containing coating in an amount of 2.5 wt% to 6 wt% based on the total weight, for example, 2.9 wt% to 5.5 wt% or 4.0 wt% to 5.0 wt%.

Therefore, the silicon-carbon-containing electrode material may achieve improved cycle life characteristics and high-temperature stability.

In some embodiments, the porous carbon structure may include amorphous carbon, and the silicon-containing coating may include amorphous silicon.

In some embodiments, the porous carbon structure may include carbon derived from at least one selected from the group consisting of wood-based biomass, petroleum pitch, phenolic polymers, aldehyde-based polymers, naphthalene-based polymers, polyacrylonitrile-based polymers, polyvinyl alcohol-based polymers, polyurethane-based polymers, polyvinylidene polymers, polyimide-based polymers, polyethylene glycol-based polymers, polypropylene-based polymers, polyethylene-based polymers, cellulose, glucose, sucrose, and organic acids.

The porous carbon structure may be formed by carbonizing and/or activating a carbonaceous material including at least one selected from wood-based biomass, petroleum pitch, phenolic polymers, naphthalene-based polymers, polyacrylonitrile-based polymers, polyvinyl alcohol-based polymers, polyurethane-based polymers, polyvinylidene polymers, polyimide-based polymers, polyethylene glycol-based polymers, polypropylene-based polymers, polyethylene-based polymers, cellulose, glucose, sucrose, and/or organic acids.

In some embodiments, the porous carbon structure may include carbon derived from wood-based biomass including coconut shell, and may include, for example, a carbon material obtained by carbonizing and activating the coconut shell.

### <Method for Manufacturing Silicon-carbon-containing electrode materials>

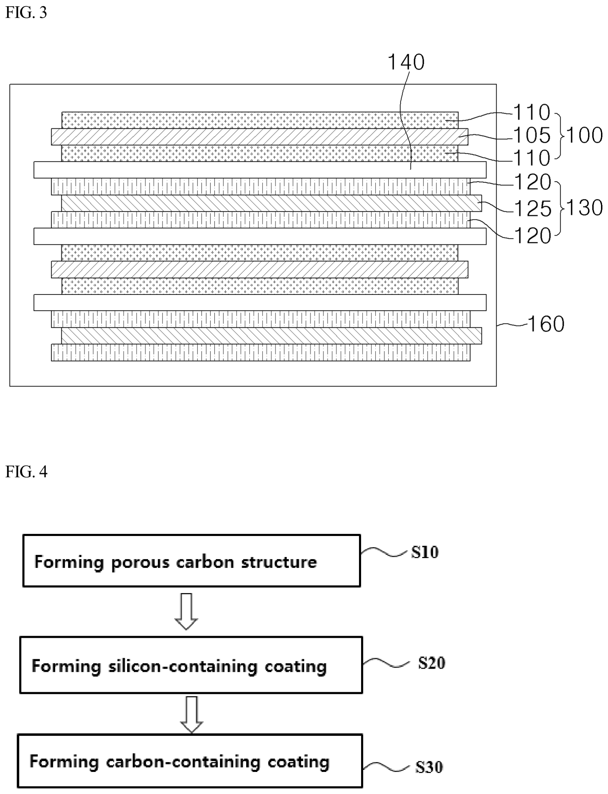

FIG. 4 is a schematic process flowchart illustrating a method for manufacturing silicon-carbon-containing electrode materials according to exemplary embodiments.

The method for manufacturing silicon-carbon-containing electrode materials according to exemplary embodiments of the present disclosure includes: forming a porous carbon structure (step S10); depositing silicon on the porous carbon structure to form a silicon-containing coating (step S20); and forming a carbon-containing coating on the silicon-containing coating (step S30).

The manufacturing method may produce the above-described silicon-carbon-containing electrode material, specifically, the silicon-carbon-containing electrode material having a color difference ($\Delta E^*$) of 5.0 to 19.0 calculated by Equation 1 and a Raman intensity ratio (R) of 0.5 to 2.0 calculated by Equation 2.

The porous carbon structure may be formed from a carbon precursor, for example, by carbonizing and/or activating the carbon precursor.

In some embodiments, the carbon precursor may include at least one selected from the group consisting of wood-based biomass, petroleum pitch, phenolic polymers, aldehyde-based polymers, naphthalene-based polymers, polyacrylonitrile-based polymers, polyvinyl alcohol-based polymers, polyurethane-based polymers, polyvinylidene polymers, polyimide-based polymers, polyethylene glycol-based polymers, polypropylene-based polymers, polyethylene-based polymers, cellulose, glucose, sucrose, and organic acids.

In some embodiments, the carbon precursor may include wood-based biomass, and for example, may include coconut shells.

If the carbon precursor includes the wood-based biomass and/or pitch, the carbon precursor may be introduced into a high-temperature reactor and dried to be stabilized.

The drying and stabilization in the high-temperature reactor may be performed, for example, under conditions where the oxygen concentration is 0.1% or less.

For example, the carbon precursor may be introduced into the high-temperature reactor, the temperature may be increased to 150 °C to 250 °C at a heating rate of 1.0 °C/min to 2.0 °C/min, and the precursor may be dried and stabilized at that temperature for 0.5 to 1.5 hours.

Thereafter, the temperature of the high-temperature reactor may be increased to the activation temperature at a heating rate of, for example, 3.5 °C/min to 4.5 °C/min, and activation was performed at that temperature for 60 to 120 minutes to form a bulk carbon structure (hereinafter, referred to as the first carbon bulk structure). The activation temperature may be 900 °C or lower, for example, 800 °C to 900 °C.

Since the wood-based biomass may undergo a carbonization reaction during the activation process, a carbonization process may not be applied between the drying and stabilization process and the activation process.

When the carbon precursor includes at least one of the above-described polymers, a carbon precursor solution may be formed by mixing the carbon precursor with a polar solvent such as water or a protic solvent. For example, a polymerization reaction may be performed within the solution to form a carbon precursor solution including a polymer gel. Prior to the polymerization reaction, a polymerization catalyst and/or a polymerization initiator may be added, and the polymerization reaction may be performed. The carbon precursor solution may be heat-treated at a temperature of 900 °C to 1200 °C, thereby forming a bulk carbon structure (hereinafter, referred to as the second carbon bulk structure). The heat treatment may include a drying and carbonization process. As a non-limiting example, phenolic polymers and aldehyde-based polymers may be used as the carbon precursor, and the molar ratio thereof may be 1 to 3, and the aldehyde-based polymer may be included in greater amounts.

As a non-limiting example, the polymerization catalyst may include an alkaline compound, such as a hydroxide of an alkali metal or an alkaline earth metal; a carbonate of an alkali metal or an alkaline earth metal; an ammonium compound such as ammonium carbonate, ammonium bicarbonate, ammonium acetate, or ammonium hydroxide; or an amine compound such as diethylamine, triethylamine, triethanolamine, ethylenediamine, or hexamethylenetetramine. As a non-limiting example, the polymerization initiator may include azobisisobutyronitrile (AIBN), t-butyl peracetate, benzoyl peroxide (BPO), acetyl peroxide, or lauryl peroxide.

For example, the polymerization temperature for polymer gel formation may be 70 °C to 100 °C, and the polymerization time may be 1 day to 4 days, or 2 days to 3 days.

The carbon precursor solution may be heat-treated at a temperature of 800 °C to 1300 °C, thereby forming the second bulk carbon structure. The heat treatment may include a drying and carbonization process. The above-described temperature range refers to the temperature range of the carbonization process. For example, the solvent in the polymer gel may be removed by drying, and pores may be formed in the space where the solvent has been removed. The dried polymer may be carbonized to form the second bulk carbon structure including pores.

If the carbon precursor includes petroleum pitch, the petroleum pitch may be mixed with a pore-forming agent to form a carbon precursor solution. The pore-forming agent may be a basic substance, and the basic substance may be, for example, NaOH. As a non-limiting example, the pitch may be prepared by polymerizing a carbon source, such as an organic compound including petroleum residue, at a temperature of 300 to 500 °C, 350 to 500 °C, 370 to 420 °C, or 380 to 400 °C for 1 to 20 hours. The weight ratio of the carbonaceous material including the pitch to the basic substance in the carbon precursor solution may be, for example, greater than 1:1 and less than 1:4, or 1:1.5 to 1:2.5.

The carbon precursor solution may be heat-treated at a temperature of 700 °C to 950 °C, thereby forming a bulk carbon structure (hereinafter, referred to as the third carbon bulk structure). The heat treatment may include a drying and carbonization process. As a non-limiting example, in the carbonization process, NaOH may be decomposed into atomic units, and gases such as CO and $CO_2$ formed by the reaction of oxygen with carbon among the decomposition products may escape, thereby forming pores. The above-described carbonization process may be performed under anaerobic conditions, for example, in an inert gas atmosphere (such as nitrogen or argon), and may be performed for an appropriate period of time to achieve the above-described pore characteristics.

The above-described first to third bulk carbon structures may be each pulverized to form a porous carbon structure.

Cooling, washing, filtering, and/or drying may be further performed before and after the pulverization.

In some embodiments, the porous carbon structure may have a specific surface area of 1,500 $m^2$/g to 1,900 $m^2$/g.

Silicon may be deposited on the porous carbon structure to form a silicon-containing coating.

The silicon deposition may be performed through a chemical vapor deposition (CVD) process or a physical vapor deposition (PVD) process using a silicon precursor.

The silicon precursor may include, for example, $SiH_4$, $SiHCl_3$, $SiH_2Cl_2$, $SiCl_4$, $CH_3SiH_3$, $Si_2H_6$, and/or $SiF_4$.

The chemical vapor deposition process may be performed at a temperature of 400 to 800 °C under an inert gas atmosphere, such as argon or nitrogen, as a carrier gas.

The ratio of the flow rate of the silicon precursor to the flow rate of the carrier gas may be 1/50 to 1/3. For example, the flow rate ratio of the silicon precursor may be 1/20 to 1/3, or 1/10 to 1/3.

In some embodiments, the silicon deposition may be performed under a pressure condition of 680 torr to 730 torr, and, for example, the pressure condition may be 680 torr or more and less than 700 torr, 680 torr to 699 torr, 680 torr to 695 torr, or 680 torr to 690 torr.

As such, the silicon deposition may be performed under a pressure condition below atmospheric pressure, allowing for more efficient control of the ratio of amorphous silicon and crystalline silicon within the silicon-containing coating formed on the porous carbon structure. Accordingly, anodes and secondary batteries including the silicon-carbon-containing electrode material thus manufactured may achieve sufficient battery performance, including output characteristics, cycle life, and high-temperature stability. In addition, by suppressing expansion and contraction of the electrode material during charge and discharge, deterioration of electrochemical performance may be prevented or suppressed.

If the silicon deposition is performed at too low a pressure, the deposition on the inner surface of the porous carbon structure may not be smoothly performed, and if the pressure is too high, the effects of silicon expansion and contraction during charge and discharge of the secondary battery may increase. Furthermore, it may be difficult to control the color difference ($\Delta E^*$) and the Raman intensity ratio within the above-described ranges, potentially resulting in deterioration of the electrochemical properties of the anode and the secondary battery.

In some embodiments, the weight ratio of the silicon-containing coating to the porous carbon structure may be adjusted to be 0.8 to 1.2. The weight ratio of the silicon-containing coating to the porous carbon structure may be adjusted to be, for example, 0.9 to 1.15 or 1.0 to 1.1.

The silicon-containing coating may include silicon.

In some embodiments, the silicon-carbon-containing electrode material may be prepared to contain 35 wt% to 65 wt% of the silicon based on the total weight, for example, 40 wt% to 60 wt%, or 50 wt% to 60 wt%.

In some embodiments, the silicon-carbon-containing electrode material may be prepared to contain 2.5 wt% to 6 wt% of the carbon-containing coating based on the total weight, for example, 2.9 wt% to 5.5 wt%, or 4.0 wt% to 5.0 wt%.

The carbon-containing coating may be formed, for example, through a chemical vapor deposition (CVD) process or a physical vapor deposition (PVD) process using a carbon precursor. The carbon precursor may include, for example, ethylene or acetylene, but is not limited thereto. The carbon deposition may be performed under a pressure condition of 730 torr to 770 torr, but is not limited thereto.

As described above, the silicon-carbon-containing electrode material according to embodiments of the present disclosure may be prepared by controlling process conditions, such as silicon deposition conditions, silicon content, carbon-containing coating content, the weight ratio of the silicon-containing coating to the porous carbon structure, raw materials for the porous carbon structure, and specific surface area, as needed.

**<Lithium Secondary Battery>**

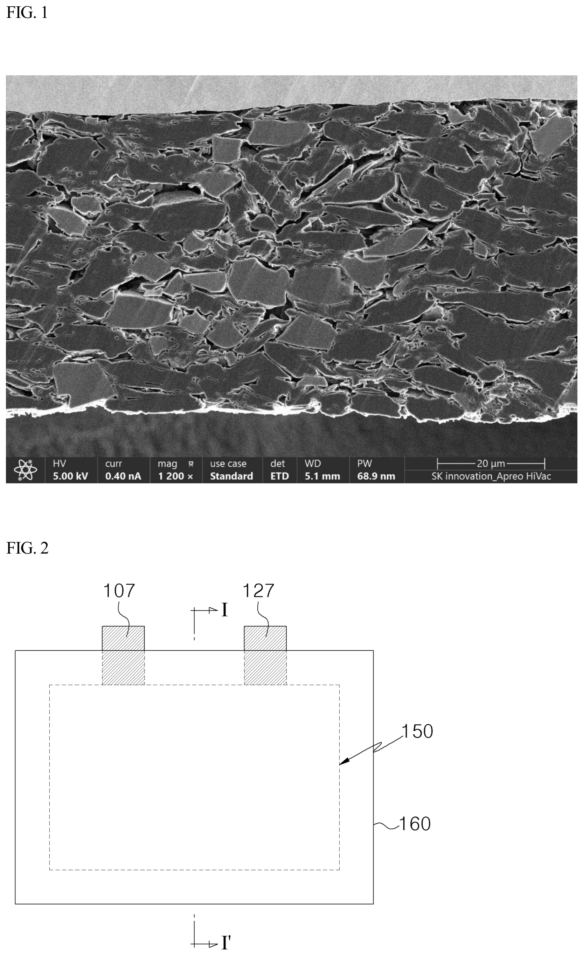

FIG. 2 is a schematic plan view illustrating a lithium secondary battery according to exemplary embodiments, and FIG. 3 is a schematic cross-sectional view illustrating the lithium secondary battery according to exemplary embodiments. FIG. 3 is a cross-sectional view taken along line I-I' of FIG. 2 in the thickness direction.

According to exemplary embodiments of the present disclosure, a lithium secondary battery that includes an anode 130 including the above-described silicon-carbon-containing electrode material; and a cathode 100 disposed opposite the anode 130 is provided.

Therefore, the lithium secondary battery may achieve improved cycle life characteristics and high-temperature stability.

In some embodiments, the lithium secondary battery may include an electrode assembly 150 comprising a cathode 100, an anode 130, and a separator 140 interposed between the cathode 100 and the anode 130. The electrode assembly 150 may be accommodated within a case 160 together with an electrolyte or an electrolyte solution containing the electrolyte, and may be impregnated therewith.

In some embodiments, the cathode 100 may include a cathode current collector 105 and a cathode active material layer 110 disposed on at least one surface of the cathode current collector 105 and including a cathode active material. The cathode 100 may include, for example, a structure in which the cathode active material layer 110 is laminated on the cathode current collector 105.

The cathode active material may include a compound capable of reversibly intercalating and deintercalating lithium ions, for example a lithium iron phosphate compound and/or a lithium transition metal composite oxide.

The lithium transition metal composite oxide may include a compound represented by Formula 1 below.

[Formula 1]     $Li_xNi_aCo_bM_cO_y$

In Formula 1, M is at least one of Al, Zr, Ti, B, Mg, Mn, Ba, Si, Y, W and Sr, and x, y, a, b and c may satisfy $0<x\leq1.1$, $2\leq y\leq2.02$, $0\leq a\leq1$, $0\leq b\leq1$, $0\leq c\leq1$, and $0<a+b+c\leq1$.

The chemical structure of Formula 1 indicates a bonding relationship among elements included in the layered structure or the crystal structure of the lithium metal oxide, and does not exclude the introduction of other additional elements.

For example, the lithium metal oxide may further include auxiliary elements to enhance the chemical stability of the active material or the layered structure/crystal structure. The auxiliary elements may be further incorporated into the layered structure/crystal structure to form bonds with the main elements, and it should be understood that this case is also included within the chemical structure range represented by Formula 1.

As a non-limiting example, the auxiliary elements may include one or more elements selected from the group consisting of, for example, Mn, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

As a non-limiting example, the cathode current collector 105 may include a metal foil or a metal plate. The metal foil or the metal plate may include, for example, stainless steel, iron, aluminum, copper, germanium, nickel, titanium, magnesium, or an alloy of two or more thereof.

In some embodiments, the cathode current collector 105 may have a thickness of, for example, 10 $\mu$m to 60 $\mu$m.

In some embodiments, the cathode active material layer 110 may have a thickness of, for example, 20 $\mu$m to 80 $\mu$m.

In some embodiments, the compaction density of the cathode 100 may be, for example, 2.0 g/cm$^3$ to 5 g/cm$^3$.

As a non-limiting example, the cathode active material layer 110 may be formed by applying a cathode slurry including the cathode active material onto at least one surface of the cathode current collector 105, followed by drying and roll-pressing.

The cathode slurry may be prepared by mixing the cathode active material, a binder, a conductive material, a dispersant, a thickener, and/or a solvent, and the mixing may be performed by a kneading process.

The cathode active material layer 110 may further include the cathode active material, the binder, the conductive material, the dispersant, and/or the thickener.

As a non-limiting example, the binder may include polyvinylidene fluoride (PVdF), a copolymer of polyhexafluoropropylene and polyvinylidene fluoride (PVdF/HFP), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, or acrylonitrile-butadiene rubber. The binder may be used with a thickener such as carboxymethyl cellulose (CMC).

As a non-limiting example, the conductive material may include carbon-based conductive materials such as graphite, carbon black, graphene, or carbon nanotubes; and/or metal-based conductive materials such as tin, tin oxide, and titanium oxide; as well as perovskite materials such as LaSrCoO$_3$, and LaSrMnO$_3$, etc.

The solvent may include, for example, N-methyl-2-pyrrolidone (NMP), dimethylformamide, dimethylacetamide, N,N-dimethylaminopropylamine, ethylene oxide, tetrahydrofuran, or the like.

In some embodiments, the anode 130 may include an anode current collector 125 and an anode active material layer 120 disposed on at least one surface of the anode current collector 125 and including an anode active material. The anode 130 may include, for example, a structure in which the anode active material layer 120 is laminated on the anode current collector 125.

The anode current collector 125 may include, for example, a copper foil, nickel foil, stainless steel foil, titanium foil, nickel foam, copper foam, or a polymer substrate coated with a conductive metal. The anode current collector 125 may have a thickness of, for example, 10 $\mu$m to 50 $\mu$m.

The anode active material may include the silicon-carbon-containing electrode material according to the above-described exemplary embodiments.

In some embodiments, the anode active material may further include a graphite-based active material, such as artificial graphite or natural graphite.

In some embodiments, the content of the silicon-carbon-containing electrode material, based on the total weight of the anode active material, may be 5 wt% or more. For example, based on 100 wt% of a total weight of the anode active material, a content of the silicon-carbon-containing electrode material may be 10 wt% or more, 20 wt% or more, 30 wt% or more, 40 wt% or more, or 50 wt% or more.

In some embodiments, the content of the silicon-carbon-containing electrode material, based on the total weight of the anode active material, may be adjusted to 95 wt% or less, 90 wt% or less, 80 wt% or less, or 70 wt% or less, taking into account battery stability, such as suppression of electrode expansion.

In one embodiment, the anode active material may be substantially composed of the above-described silicon-carbon-containing electrode material.

The anode active material may be included in an amount of 60 wt% to 99 wt% based on the total weight of the anode active material layer 120, for example, 70 wt% to 98 wt%, or 80 wt% to 98 wt%, based on 100 wt% of a total weight of the anode active material layer 120.

As a non-limiting example, the anode active material layer 120 may be formed by applying an anode slurry including the anode active material onto at least one surface of the anode current collector 125, followed by drying and roll-pressing.

The anode slurry may be prepared by mixing the anode active material, a binder, a conductive material, a dispersant, a thickener, and/or a solvent, and the mixing may be performed by a kneading process.

The anode active material layer 120 may further include the anode active material, the binder, the conductive material, the dispersant, and/or the thickener.

As a non-limiting example, the anode binder may include a polymer material such as styrene-butadiene rubber (SBR), and may be used together with a thickener such as carboxymethyl cellulose (CMC). As a non-limiting example, the solvent may be an aqueous solvent such as water, an aqueous hydrochloric acid solution, or an aqueous sodium hydroxide solution. Other components in the anode slurry may refer to the description above regarding the cathode slurry.

The separator 140 may be interposed between the cathode 100 and the anode 130. The separator 140 may be configured to prevent an electrical short-circuit between the cathode 100 and the anode 130 and to allow the flow of ions. For example, the separator 140 may have a thickness of 10 $\mu$m to 20 $\mu$m.

For example, the separator 140 may include a porous polymer film or a porous nonwoven fabric.

The porous polymer film may include a polyolefin-based polymer such as an ethylene polymer, propylene polymer, ethylene/butene copolymer, ethylene/hexene copolymer, or ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, the electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the separator 140.

The electrode assembly 150 may be accommodated in a case 160 together with an electrolyte or an electrolyte solution containing the electrolyte, to thereby define a lithium secondary battery. In some embodiments, a non-aqueous electrolyte may be used as the electrolyte solution, or a solid electrolyte may be used instead of the electrolyte solution.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

The non-aqueous electrolyte may include a lithium salt of an electrolyte and an organic solvent. The lithium salt is represented by, for example, $Li^{+}X^{-}$, and as an anion ($X^{-}$) of the lithium salt, $F^{-}$, $Cl^{-}$, $Br^{-}$, $I^{-}$, $NO_3^{-}$, $N(CN)_2^{-}$, $BF_4^{-}$, $ClO_4^{-}$, $PF_6^{-}$, $(CF_3)_2PF_4^{-}$, $(CF_3)_3PF_3^{-}$, $(CF_3)_4PF_2^{-}$, $(CF_3)_5PF^{-}$, $(CF_3)_6P^{-}$, $CF_3SO_3^{-}$, $CF_3CF_2SO_3^{-}$, $(CF_3SO_2)_2N^{-}$, $(FSO_2)_2N^{-}$, $CF_3CF_2(CF_3)_2CO^{-}$, $(CF_3SO_2)_2CH^{-}$, $(SF_5)_3C^{-}$, $(CF_3SO_2)_3C^{-}$, $CF_3(CF_2)_7SO_3^{-}$, $CF_3CO_2^{-}$, $CH_3CO_2^{-}$, $SCN^{-}$ and $(CF_3CF_2SO_2)_2N^{-}$, etc. may be exemplified.

As the organic solvent, for example, propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane (DME), tetrahydrofuran (THF), 2-methyltetrahydrofuran, ethyl alcohol, isopropyl alcohol, dimethyl sulfoxide, acetonitrile, diethoxyethane, sulfolane, $\gamma$-butyrolactone, and propylene sulfite may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

The solid electrolyte may include a sulfide-based electrolyte. As a non-limiting example, the sulfide-based electrolyte may include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li2O, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, Z is Ge, Zn or Ga), $Li_2S$-$GeS_2$, $Li_2S$-$SiS_2$-$Li_3PO_4$, $Li_2S$-$SiS_2$-$Li_pMO_q$ (p and q are positive numbers, M is P, Si, Ge, B, Al, Ga or In), $Li_7$-$xPS_6$-$xCl_x$ ($0 \leq x \leq 2$), $Li_7$-$xPS_6$-$xBr_x$ ($0 \leq x \leq 2$), $Li_7$-$xPS_6$-$xI_x$ ($0 \leq x \leq 2$), etc. These may be used alone or in combination of two or more thereof.

In one embodiment, the solid electrolyte may include an oxide-based amorphous solid electrolyte, such as, for

example, $Li_2O$-$B_2O_3$-$P_2O_5$, $Li_2O$-$SiO_2$, $Li_2O$-$B_2O_3$, $Li_2O$-$B_2O_3$-$ZnO$, etc.

As illustrated in FIGS. 2 and 3, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 and connected to electrode leads (a cathode lead 107 and an anode lead 127) that extend or are exposed to the outside of the case 160.

The lithium secondary battery may be manufactured, for example, in a cylindrical, prismatic, pouch, or coin type using a can.

In a first aspect, the present disclosure provides a silicon-carbon-containing electrode material comprising: a porous carbon structure; a silicon-containing coating disposed on the porous carbon structure; and a carbon-containing coating disposed on the silicon-containing coating, wherein the color difference ($\Delta E^*$) calculated by Equation 1 is from 5.0 to 19.0, and the Raman intensity ratio (R) calculated by Equation 2 is from 0.5 to 2.0:

[Equation 1]

$$\text{Color difference } (\Delta E^*) = [(L^*)^2 + (a^*)^2 + (b^*)^2]^{1/2}$$

in Equation 1, $L^*$ denotes a lightness index, and $a^*$ and $b^*$ denote chromaticity indices measured for the silicon-carbon-containing electrode material according to the CIE 1976 Lab color space under CIE Standard Illuminant D65 conditions.

[Equation 2]

$$\text{Raman intensity ratio } (R) = I_{c\text{-}si}/I_{a\text{-}si}$$

in Equation 2, $I_{c\text{-}si}$ denotes a maximum peak intensity in a Raman shift range of 515 $cm^{-1}$ to 524 $cm^{-1}$ in a Raman spectrum measured for the silicon-containing coating, and $I_{a\text{-}si}$ denotes a maximum peak intensity in a Raman shift range of 470 $cm^{-1}$ to 490 $cm^{-1}$ in the Raman spectrum.

In the first aspect, and according to the second aspect, $\Delta E^*$ may be 8.0 to 19.0.

In the first or second aspect, and according to the third aspect, the Raman intensity ratio (R) may be greater than 1.0 and not more than 2.0.

In any one of the first to third aspects, and according to a fourth aspect, the porous carbon structure may comprise amorphous carbon, and the silicon-containing coating may comprise amorphous silicon.

In any one of the first to fourth aspects, and according to a fifth aspect, the silicon-carbon-containing electrode material may have a specific surface area of 1 m$^2$/g to 10 m$^2$/g.

In any one of the first to fifth aspects, and according to a sixth aspect, the porous carbon structure may have a median particle diameter of 4 $\mu$m to 10 $\mu$m.

In any one of the first to sixth aspects, and according to a seventh aspect, the weight ratio of the silicon-containing coating to the porous carbon structure may be from 0.8 to 1.2.

In any one of the first to seventh aspects, and according to an eighth aspect, the carbon-containing coating may be present in an amount of 2.5 wt% to 6.0 wt% based on the total weight of the electrode material.

In any one of the first to eighth aspects, and according to a ninth aspect, the porous carbon structure may comprise carbon derived from one or more materials selected from: wood-based biomass, petroleum pitch, phenolic polymers, aldehyde-based polymers, naphthalene-based polymers, polyacrylonitrile-based polymers, polyvinyl alcohol-based polymers, polyurethane-based polymers, polyvinylidene polymers, polyimide-based polymers, polyethylene glycol-based polymers, polypropylene-based polymers, polyethylene-based polymers, cellulose, glucose, sucrose, and organic acids.

In a tenth aspect, the present disclosure provides a method for manufacturing a silicon-carbon-containing electrode material, the method comprising: forming a porous carbon structure;

depositing silicon on the porous carbon structure; and forming a carbon-containing coating on the silicon-containing coating, wherein the resulting silicon-carbon-containing electrode material satisfies the $\Delta E^*$ and R conditions, wherein the color difference ($\Delta E^*$) calculated by Equation 1 is from 5.0 to 19.0, and the Raman intensity ratio (R) calculated by Equation 2 is from 0.5 to 2.0:

[Equation 1]

$$\text{Color difference } (\Delta E^*) = [(L^*)^2 + (a^*)^2 + (b^*)^2]^{1/2}$$

in Equation 1, L* denotes a lightness index, and a* and b* denote chromaticity indices measured for the silicon-carbon-containing electrode material according to the CIE 1976 Lab color space under CIE Standard Illuminant D65 conditions.

$$[\text{Equation 2}]$$

$$\text{Raman intensity ratio (R)} = I_{c\text{-si}}/I_{a\text{-si}}$$

in Equation 2, $I_{c\text{-si}}$ denotes a maximum peak intensity in a Raman shift range of 515 cm$^{-1}$ to 524 cm$^{-1}$ in a Raman spectrum measured for the silicon-containing coating, and Ia-si denotes a maximum peak intensity in a Raman shift range of 470 cm$^{-1}$ to 490 cm$^{-1}$ in the Raman spectrum.

In the tenth aspect, and according to an eleventh aspect, the silicon deposition may be performed at a pressure of 680 torr to 730 torr.

In the tenth or eleventh aspect, and according to a twelfth aspect, the silicon deposition may be performed at a pressure of 680 torr or more and less than 700 torr.

In any one of the tenth to twelfth aspects, and according to a thirteenth aspect, the carbon precursor may comprise one or more materials selected from the same group recited in the ninth aspect.

In the thirteenth aspect, and according to a fourteenth aspect, the carbon precursor may comprise wood-based biomass including coconut shells.

In a fifteenth aspect, the present disclosure provides a secondary battery comprising: an anode comprising the silicon-carbon-containing electrode material according to any one of the first to fourteenth aspects; and a cathode disposed opposite the anode.

Hereinafter, the embodiments of the present disclosure will be further described with reference to specific experimental examples.

Example **1**

Preparation of Silicon-carbon-containing electrode material

(1) Formation of Porous Carbon Structure

Coconut shells were introduced into a high-temperature reactor, heated to 200 °C at a heating rate of 1.5 °C/min, and dried and stabilized at that temperature for 1 hour.

The temperature of the high-temperature reactor was then increased to an activation temperature of 900 °C at a heating rate of 4.0 °C/min, and activation was performed at that temperature for 90 minutes to form a bulk carbon structure.

The bulk carbon structure was pulverized to form a porous carbon structure.

The porous carbon structure had a specific surface area of 1,700 m$^2$/g and a median particle diameter of 8 $\mu$m.

(2) Formation of Silicon-Containing Coating

A silicon-containing coating was formed by depositing silicon on the porous carbon structure, which was prepared through a CVD process using $SiH_4$ as a silicon precursor.

Specifically, 7.5 g of the porous carbon structure was loaded into a reaction furnace of a CVD chamber, and the CVD process was performed under the following conditions: a temperature of 500 °C, a pressure of 730 torr which is lower than atmospheric pressure of approximately 760 torr, a $SiH_4$ flow rate of 50 sccm, an $N_2$ flow rate of 450 sccm, and a deposition time of 360 minutes.

(3) Formation of Carbon-Containing Coating

A carbon-containing coating was formed by depositing carbon on the silicon-containing coating through a CVD process using $C_2H_2$ (acetylene) and $C_2H_4$ (ethylene) as carbon precursors instead of $SiH_4$.

Specifically, 15.0 g of the porous carbon structure having the silicon-containing coating formed thereon was loaded into a reaction furnace of a CVD chamber, and the CVD process was performed under the following conditions: a temperature of 700 °C, a pressure of 760 torr, $C_2H_2$ and $C_2H_4$ flow rates of 100 sccm, an $H_2$ flow rate of 300 sccm, and a deposition time of 240 minutes.

### Example 2

A silicon-carbon-containing electrode material was prepared in the same manner as in Example 1, except that the pressure conditions in the silicon-containing coating formation process (2) were changed as shown in Table 1 below.

### Example 3

A silicon-carbon-containing electrode material was prepared in the same manner as in Example 1, except that the CVD deposition time in the carbon-containing coating formation process (3) was adjusted so as to change the coating content as shown in Table 1 below.

### Example 4

A silicon-carbon-containing electrode material was prepared in the same manner as in Example 3, except that the pressure conditions in the silicon-containing coating formation process (2) were changed as shown in Table 1 below.

### Comparative Example 1 (Silicon-Containing Coating, and SiC Composite formed without Carbon-Containing Coating)

Natural graphite, pitch, and silicon powder were introduced into a reactor and mixed at a weight ratio of 45:5:50 (natural graphite : pitch : silicon powder). The mixture was then heat-treated at 1000 °C to 1100 °C for 4 hours to carbonize the mixture, thereby preparing a silicon-carbon-containing electrode material.

### Comparative Example 2 (High-Pressure Silicon Deposition and Excluding Carbon-Containing Coating)

A silicon-carbon-containing electrode material was prepared in the same manner as in Example 1, except that the pressure conditions in the silicon-containing coating formation process (2) were changed as shown in Table 1 below, and the carbon-containing coating formation process (3) was not performed.

### Comparative Examples 3 and 4 (High-Pressure Silicon Deposition)

A silicon-carbon-containing electrode material was prepared in the same manner as in Example 1, except that the pressure conditions in the silicon-containing coating formation process (2) were changed as shown in Table 1 below.

### Comparative Example 5 (High Specific Surface Area of Porous Carbon Structure and High-Pressure Silicon Deposition)

In the (1) porous carbon structure formation process, the temperature of the high-temperature reactor was increased to an activation temperature of 1000 °C at a heating rate of 4.0 °C/min, and activation was performed at that temperature for 150 minutes to form a bulk carbon structure.

Accordingly, a porous carbon structure having a specific surface area of 2,000 $m^2$/g was formed, as shown in Table 1 below, and a silicon-carbon-containing electrode material was prepared in the same manner as in Example 3, except that the pressure conditions in the silicon-containing coating formation process (2) were changed as shown in Table 1 below.

### Comparative Example 6 (Excess Carbon-Containing Coating)

A silicon-carbon-containing electrode material was prepared in the same manner as in Example 1, except that the carbon-containing coating content was increased as shown in Table 1 below.

Manufacture of Lithium Secondary Battery

The silicon-carbon-containing electrode materials prepared in the above-described examples and comparative examples were used as anode active materials, respectively, to manufacture lithium secondary batteries as follows.

An anode active material, styrene butadiene rubber (SBR), and carboxymethyl cellulose (CMC) as a thickener were mixed in a mass ratio of 97.8:1.2:1.0, and then dispersed in deionized water to prepare an anode slurry. The anode slurry was applied onto a copper foil having a thickness of 8 $\mu$m, excluding the protrusion (anode tab), and then dried and roll-pressed to fabricate an anode.

$Li_{1.0}Ni_{0.6}Co_{0.2}Mn_{0.2}O_2$ as a cathode active material, Denka Black as a conductive material, PVDF as a binder, and N-methyl-2-pyrrolidone as a solvent were mixed in a mass ratio of 46:2.5:1.5:50 to prepare a cathode slurry. The cathode slurry was applied onto an aluminum foil having a thickness of 12 $\mu$m, excluding the protrusion (cathode tab), and then dried and roll-pressed to fabricate a cathode.

The cathode and anode were each notched to a predetermined size and laminated, and a separator (polyethylene film) having a thickness of 13 $\mu$m was interposed between the cathode and the anode to form an electrode assembly. The cathode leads and anode leads were then welded to the cathode tabs and anode tabs. The electrode assembly was placed in a pouch such that a portion of the cathode leads and the anode leads was exposed externally, and three sides other than an electrolyte injection side were sealed. At this time, the portion having the electrode tabs was included in the sealed area. The electrolyte prepared in Example 1 was injected through the electrolyte injection side, and the electrolyte injection side was then sealed. After impregnation for 12 hours or longer, a lithium secondary battery was manufactured.

**Experimental Example**

Experimental Example 1: Evaluation of Silicon Content

The silicon content based on the total weight of the silicon-carbon-containing electrode material was measured using an ICP-OES analyzer. Specifically, the sample was placed in a PP tube, nitric acid and a small amount of hydrofluoric acid were added, and the mixture was allowed to dissolve overnight. After the sample was dissolved, the mixture was refrigerated, neutralized with saturated boric acid solution, and diluted with ultrapure water. After the residual carbon was removed using a 0.45 $\mu$m syringe filter, and ICP-OES analysis was performed.

The results are shown in Table 1.

Experimental Example 2: Evaluation of Carbon-containing Coating Content

The mass of the carbon-containing coating was measured before and after the CVD process for forming the carbon-containing coating. Based on the mass increase amount calculated using Equation 3 below, the carbon-containing coating content (wt%) was calculated.

$$[\text{Equation 3}]$$

$$\text{Mass increase amount} = (W2-W1)/W1 \times 100$$

In Equation 3, $W_1$ denotes the mass of the porous carbon structure having the silicon-containing coating before the carbon-containing coating is formed, and $W_2$ denotes the mass of the porous carbon structure after the carbon-containing coating is formed, that is, the silicon-carbon-containing electrode material.

The results are shown in Table 1.

Experimental Example 3: Measurement of Specific Surface Area

The specific surface area of the silicon-carbon-containing electrode material was calculated as a surface area per unit mass by measuring the physical adsorption of gas molecules on the solid surface using a 3-Flex Adsorption Analyzer system according to ISO 9277.

The results are shown in Table 2.

Experimental Example 4: Raman Intensity Ratio (R)

For Raman spectroscopy analysis, the resolution was approximately 1 $\mu$m.

For the silicon-carbon-containing electrode material, 3,000 areas of 50 $\mu$m $\times$ 50 $\mu$m were randomly designated on the surface. For each area, the laser was irradiated for 10 seconds and scanned to obtain a Raman spectroscopy spectrum.

The specific Raman spectroscopy measurement conditions are as follows:

i) Equipment : Renishaw inVia Raman spectroscope
ii) Laser irradiation wavelength and intensity : 532 nm, 0.01 to 0.5 mW
iii) Exposure time and number of scans : 10 seconds, 10 times
iv) Grating: 1800 L/mm

v) Detector: 1024 StreamLine CCD array detector
vi) Objective: x50

In the obtained Raman spectrum, Ic-si was defined as the maximum peak intensity in a Raman shift range of 515 cm$^{-1}$ to 524 cm$^{-1}$ in the Raman spectrum measured for the silicon-containing coating, and Ia-si was defined as the maximum peak intensity in a Raman shift range of 470 cm$^{-1}$ to 490 cm$^{-1}$ in the Raman spectrum.
The Raman intensity ratio (R) was calculated by dividing Ic-si by Ia-si according to Equation 2 described above.
The results are shown in Table 2.

Experimental Example 5: Color Difference ($\Delta E^*$)

Under conditions of 25 °C and a relative humidity of less than 70%, the silicon-carbon-containing electrode material was placed on a white background plate, and measurements were taken at three arbitrary points on the surface of the electrode material using a Color Reader CR-20. The average of the measured values was calculated, and the results are shown in Table 2.

Experimental Example 6: Cycle Capacity Retention

The lithium secondary batteries manufactured according to the above-described examples and comparative examples were subjected to performance evaluation using a charge/discharge tester (Toyo-System Co., LTD, TOSCAT-3600) as follows.
The lithium secondary batteries were subjected to 50 cycles of 1.0C CC/CV charging (3.65 V, 0.05C cut-off) and 1.0C CC discharging (2.5 V cut-off) at 25 °C. The discharge capacity at the first cycle was denoted as C, and the ratio of the discharge capacity at the 50th cycle to the discharge capacity at the first cycle, expressed as a percentage, was evaluated as the cycle capacity retention. The results are shown in Table 2.

Experimental Example 7: Storage Capacity Retention after 8 Weeks at 60 °C (High-Temperature Storage Capacity Retention)

The lithium secondary battery was subjected to three cycles of 0.5C CC/CV charging (3.65 V, 0.05C cut-off) and 0.5C CC discharging (2.5 V cut-off) at 25 °C, and the discharge capacity C1 after the third cycle was measured. The charged lithium secondary battery was then stored at 60 °C for 8 weeks, followed by an additional 30-minute rest at room temperature, and the discharge capacity C2 was measured by performing a 0.5C CC discharge (2.5 V cut-off).
The high-temperature storage capacity retention was calculated by substituting C1 and C2 into Equation 4 below.

[Equation 4]

$$\text{High-temperature storage capacity retention (\%)} = C2/C1 \times 100$$

The results are shown in Table 2.

TABLE 1

| | Porous carbon structure | Silicone-containing coating | | | Carbon-containing coating | |
|---|---|---|---|---|---|---|
| | Specific surface area (m$^2$/g) | Process | Pressure (torr) | Si content (wt%) | Process | Coating content (wt%) |
| Example 1 | 1,700 | CVD | 730 | 49 | CVD | 2.91 |
| Example 2 | 1,700 | CVD | 680 | 49 | CVD | 2.91 |
| Example 3 | 1,700 | CVD | 730 | 48 | CVD | 4.76 |
| Example 4 | 1,700 | CVD | 699 | 48 | CVD | 4.76 |
| Comparative Example 1 | Silicon-carbon mixed composite (weight ratio of Si:C = 1:1) | | | | | |
| Comparative Example 2 | 1,700 | CVD | 760 | 50 | CVD | - |

(continued)

| | Porous carbon structure | Silicone-containing coating | | | Carbon-containing coating | |
|---|---|---|---|---|---|---|
| | Specific surface area (m$^2$/g) | Process | Pressure (torr) | Si content (wt%) | Process | Coating content (wt%) |
| Comparative Example 3 | 1,700 | CVD | 760 | 49 | CVD | 2.91 |
| Comparative Example 4 | 1,700 | CVD | 820 | 49 | CVD | 2.91 |
| Comparative Example 5 | 2,000 | CVD | 820 | 48 | CVD | 4.76 |
| Comparative Example 6 | 1,700 | CVD | 730 | 47 | CVD | 6.91 |

In Table 1, the Si content and carbon-containing coating content are based on the total weight of the silicon-carbon-containing electrode material.

TABLE 2

| | $\Delta E^*$ | Raman intensity ratio (c-Si/a-Si) | Specific surface area of silicon-carbon-containing electrode material (m$^2$/g) | Cycle capacity retention (50 cycles) | High-temperature characteristics (8 weeks) |
|---|---|---|---|---|---|
| Example 1 | 10.3 | 1.3 | 3 | 95 | 97 |
| Example 2 | 14.9 | 1.2 | 5 | 97 | 97 |
| Example 3 | 9.1 | 1.6 | 5 | 98 | 99 |
| Example 4 | 8.2 | 1.5 | 7 | 97 | 98 |
| Comparative Example 1 | 3.9 | 5.0 | 5 | 60 | 40 |
| Comparative Example 2 | 20.8 | 2.3 | 40 | 30 | 40 |
| Comparative Example 3 | 8.2 | 2.1 | 6 | 60 | 50 |
| Comparative Example 4 | 18.3 | 2.5 | 25 | 60 | 80 |
| Comparative Example 5 | 6.1 | 2.8 | 8 | 70 | 50 |
| Comparative Example 6 | 4.2 | 2.8 | 5 | 50 | 40 |

The silicon-carbon-containing electrode materials according to the examples exhibited a color difference ($\Delta E^*$) of 5 to 19 and a Raman intensity ratio (R), calculated by Equation 2, of 0.5 to 2.0. Accordingly, the secondary batteries including the silicon-carbon-containing electrode materials according to the examples exhibited excellent cycle life retention and high-temperature characteristics.

In Comparative Example 1, in which the silicon-containing coating and the carbon-containing coating were formed as a composite by mixing and heat-treating the silicon precursor and carbon precursor together rather than forming them through separate deposition processes, the color difference ($\Delta E^*$) was less than 5, and the Raman intensity ratio was greater than 2. Accordingly, the secondary battery including the electrode material of Comparative Example 1 exhibited significantly reduced cycle life retention and high-temperature performance.

In Comparative Example 2, which did not include a carbon-containing coating, the color difference ($\Delta E^*$) was greater than 19 and the Raman intensity ratio was greater than 2. Consequently, the secondary battery including the electrode material of Comparative Example 2 exhibited the lowest cycle life retention and extremely poor high-temperature performance.

In Comparative Examples 3 to 5, where excessively high pressures were applied during the silicon-containing coating deposition process, the Raman intensity ratios were all greater than 2. As a result, the cycle life retention and high-temperature performance of the secondary batteries deteriorated. In particular, in Comparative Example 5, where the porous carbon structure had a large specific surface area under high-pressure silicon deposition conditions and the carbon-containing coating content was relatively increased, the high-temperature performance was further degraded.

Although silicon was deposited under the same pressure conditions as in Example 1 during the silicon-containing coating deposition process, in Comparative Example 6, where the carbon-containing coating content was excessively high, the color difference (ΔE*) was less than 5 and the Raman intensity ratio was greater than 2. Accordingly, the secondary battery including the electrode material of Comparative Example 6 exhibited extremely low cycle life retention and high-temperature performance.

**Claims**

1. A silicon-carbon-containing electrode material comprising:

   a porous carbon structure;
   a silicon-containing coating disposed on the porous carbon structure; and
   a carbon-containing coating disposed on the silicon-containing coating,
   wherein the color difference (ΔE*) calculated by Equation 1 below is 5.0 to 19.0, and the Raman intensity ratio (R) calculated by Equation 2 below is 0.5 to 2.0:

   [Equation 1]

   $$\text{Color difference } (\Delta E^*) = [(L^*)^2+(a^*)^2+(b^*)^2]^{1/2}$$

   (in Equation 1, $L^*$ denotes a lightness index, and $a^*$ and $b^*$ denote chromaticity indices measured for the silicon-carbon-containing electrode material according to the CIE 1976 Lab color space under CIE Standard Illuminant D65 conditions)

   [Equation 2]

   $$\text{Raman intensity ratio } (R) = I_{c\text{-si}}/I_{a\text{-si}}$$

   (in Equation 2, $I_{c\text{-si}}$ denotes a maximum peak intensity in a Raman shift range of 515 cm$^{-1}$ to 524 cm$^{-1}$ in a Raman spectrum measured for the silicon-containing coating, and Ia-si denotes a maximum peak intensity in a Raman shift range of 470 cm$^{-1}$ to 490 cm$^{-1}$ in the Raman spectrum).

2. The silicon-carbon-containing electrode material according to claim 1, wherein ΔE* is 8.0 to 19.0.

3. The silicon-carbon-containing electrode material according to claims 1 or 2, wherein the Raman intensity ratio (R) is greater than 1.0 and not more than 2.0.

4. The silicon-carbon-containing electrode material according to any one of claims 1 to 3, wherein the porous carbon structure comprises amorphous carbon, and the silicon-containing coating comprises amorphous silicon.

5. The silicon-carbon-containing electrode material according to any one of claims 1 to 4, wherein the silicon-carbon-containing electrode material has a specific surface area of 1 m$^2$/g to 10 m$^2$/g.

6. The silicon-carbon-containing electrode material according to any one of claims 1 to 5, wherein the porous carbon structure has a median particle diameter of 4 μm to 10 μm.

7. The silicon-carbon-containing electrode material according to any one of claims 1 to 6, wherein the weight ratio of the silicon-containing coating to the porous carbon structure is 0.8 to 1.2.

8. The silicon-carbon-containing electrode material according to any one of claims 1 to 7, wherein the content of the carbon-containing coating is 2.5% by weight to 6.0% by weight based on the total weight of the electrode material.

9. The silicon-carbon-containing electrode material according to any one of claim 1 to 8, wherein the porous carbon structure comprises carbon derived from at least one selected from the group consisting of wood-based biomass, petroleum pitch, phenolic polymers, aldehyde-based polymers, naphthalene-based polymers, polyacrylonitrile-based polymers, polyvinyl alcohol-based polymers, polyurethane-based polymers, polyvinylidene polymers, polyimide-based polymers, polyethylene glycol-based polymers, polypropylene-based polymers, polyethylene-based polymers, cellulose, glucose, sucrose, and organic acids.

10. A method for manufacturing a silicon-carbon-containing electrode material, the method comprising:

forming a porous carbon structure;
depositing silicon on the porous carbon structure to form a silicon-containing coating; and
forming a carbon-containing coating on the silicon-containing coating,
wherein the silicon-carbon-containing electrode material manufactured by the method has a color difference ($\Delta E^*$) calculated by Equation 1 below is 5.0 to 19.0, and a Raman intensity ratio (R) calculated by Equation 2 below is 0.5 to 2.0:

[Equation 1]

$$\text{Color difference } (\Delta E^*) = [(L^*)^2 + (a^*)^2 + (b^*)^2]^{1/2}$$

(L* denotes a lightness index, and a* and b* denote chromaticity indices measured for the silicon-carbon-containing electrode material according to the CIE 1976 Lab color space under CIE Standard Illuminant D65 conditions)

[Equation 2]

$$\text{Raman intensity ratio } (R) = I_{c\text{-si}}/I_{a\text{-si}}$$

(in Equation 2, $I_{c\text{-si}}$ denotes a maximum peak intensity in a Raman shift range of 515 cm$^{-1}$ to 524 cm$^{-1}$ in a Raman spectrum measured for the silicon-containing coating, and Ia-si denotes a maximum peak intensity in a Raman shift range of 470 cm$^{-1}$ to 490 cm$^{-1}$ in the Raman spectrum).

11. The method according to claim 10, wherein the silicon deposition is performed under a pressure condition of 680 torr to 730 torr.

12. The method according to claim 11, wherein the silicon deposition is performed under a pressure condition of 680 torr or more and less than 700 torr.

13. The method according to any one of claims 10 to 12, wherein the carbon precursor comprises at least one selected from the group consisting of wood-based biomass, petroleum pitch, phenolic polymers, aldehyde-based polymers, naphthalene-based polymers, polyacrylonitrile-based polymers, polyvinyl alcohol-based polymers, polyurethane-based polymers, polyvinylidene polymers, polyimide-based polymers, polyethylene glycol-based polymers, polypropylene-based polymers, polyethylene-based polymers, cellulose, glucose, sucrose, and organic acids.

14. The method according to claim 13, wherein the carbon precursor comprises wood-based biomass including coconut shells.

15. A secondary battery comprising:

an anode(130) comprising the silicon-carbon-containing electrode material according to any one of claims 1 to 14; and
a cathode(100) disposed opposite the anode(130).

FIG. 1

| | HV | curr | mag | use case | det | WD | PW | |
|---|---|---|---|---|---|---|---|---|
| | 5.00 kV | 0.40 nA | 1 200 × | Standard | ETD | 5.1 mm | 68.9 nm | 20 μm — SK innovation_Apreo HiVac |

FIG. 2

FIG. 3

FIG. 4

Forming porous carbon structure — S10

Forming silicon-containing coating — S20

Forming carbon-containing coating — S30

Europäisches
Patentamt

European
Patent Office

Office européen
des brevets

# EUROPEAN SEARCH REPORT

**Application Number**

**EP 25 22 7110**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/297299 A1 (LEE YONG SEOK [KR] ET AL) 5 September 2024 (2024-09-05)<br>* example 1 *<br>* paragraphs [0091], [98104] - [0106], [0158] - [0163], [0193] - [0222] *<br>----- | 1-15 | INV.<br>H01M4/134<br>H01M4/1395<br>H01M4/36<br>H01M4/38 |
| A | EP 4 159 675 A1 (SHOWA DENKO KK [JP]; RESONAC CORP [JP]) 5 April 2023 (2023-04-05)<br>* "Preparation Example 3"; paragraphs [0091] - [0098] *<br>* figure 1 *<br>* paragraph [0020] *<br>----- | 1-15 | |
| A | EP 4 160 726 A1 (SHOWA DENKO KK [JP]; RESONAC CORP [JP]) 5 April 2023 (2023-04-05)<br>* example 1 *<br>* figure 2 *<br>----- | 1-15 | |

| | |
|---|---|
| | TECHNICAL FIELDS SEARCHED (IPC) |
| | H01M |

The present search report has been drawn up for all claims

| Place of search | Date of completion of the search | Examiner |
|---|---|---|
| Munich | 20 April 2026 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7110

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2026

| Patent document cited in search report | | | Publication date | Patent family member(s) | | Publication date |
|---|---|---|---|---|---|---|
| US 2024297299 | A1 | | 05-09-2024 | CN 118588887 | A | 03-09-2024 |
| | | | | EP 4451381 | A1 | 23-10-2024 |
| | | | | KR 20240134543 | A | 10-09-2024 |
| | | | | US 2024297299 | A1 | 05-09-2024 |
| EP 4159675 | A1 | | 05-04-2023 | CN 115699360 | A | 03-02-2023 |
| | | | | EP 4159675 | A1 | 05-04-2023 |
| | | | | JP 7509200 | B2 | 02-07-2024 |
| | | | | JP WO2021241751 | A1 | 02-12-2021 |
| | | | | KR 20230017260 | A | 03-02-2023 |
| | | | | US 2023234852 | A1 | 27-07-2023 |
| | | | | WO 2021241751 | A1 | 02-12-2021 |
| EP 4160726 | A1 | | 05-04-2023 | CN 115668545 | A | 31-01-2023 |
| | | | | EP 4160726 | A1 | 05-04-2023 |
| | | | | JP 7405249 | B2 | 26-12-2023 |
| | | | | JP WO2021241754 | A1 | 02-12-2021 |
| | | | | KR 20230017259 | A | 03-02-2023 |
| | | | | US 2023223537 | A1 | 13-07-2023 |
| | | | | WO 2021241754 | A1 | 02-12-2021 |

EPO FORM P0459

For more details about this annex : see Official Journal of the European Patent Office, No. 12/82